# EUROPEAN PATENT APPLICATION

(11) **EP 2 546 443 A1**
(43) Date of publication of application: **16.01.2013**
(21) Application number: 10847526.0
(22) Date of filing: 12.03.2010
(51) Int. Cl.: E05F 3/14, E05F 3/04, F16F 9/10

(54) **DOOR DAMPER BUFFER**

(71) Applicant: Moonju Hardware Co., Ltd., Incheon 405-846 (KR)
(72) Inventor: KIM, Jae Hong, Seoul 157-010 (KR)
(74) Representative: Barth, Stephan Manuel
(86) International application number: PCT/KR2010/001566
(87) International publication number: WO 2011/111892

(57) **Abstract**

The present invention relates to a door damper buffer which can quickly switch the flow of a fluid filled therein to quickly and precisely perform a buffering action. The present invention includes a body 52 in which fluid is filled and in which a spring 57 is inserted; a piston member 54 inserted into the body 52 and elastically supported by the spring 57; and an actuating pin 56 coupled to the piston member 54, wherein the piston member 54 includes: a piston 542 provided with a plurality of recesses 5423 in an outer peripheral surface thereof to enable the fluid to move; a disk 544 disposed at a front end portion of the piston 542 and coupled so as to be movable along the actuating pin 56; and a head 546 provided with a plurality of steps 5469 and recesses 5468 in an outer peripheral surface thereof so as to enable the fluid to be transferred.

## Description

### Technical Field

The present invention relates to a door damper buffer for absorbing shock and noise generated in closing a door, and more particularly, to a door damper buffer capable of quickly switching a flow of a fluid filled therein, thereby quickly and precisely performing a buffering action.

### Background Art

A door damper, which is generally installed in a hinged door, absorbs a shock applied in closing a door to enable the door to be smoothly closed, thereby preventing noise and shock.

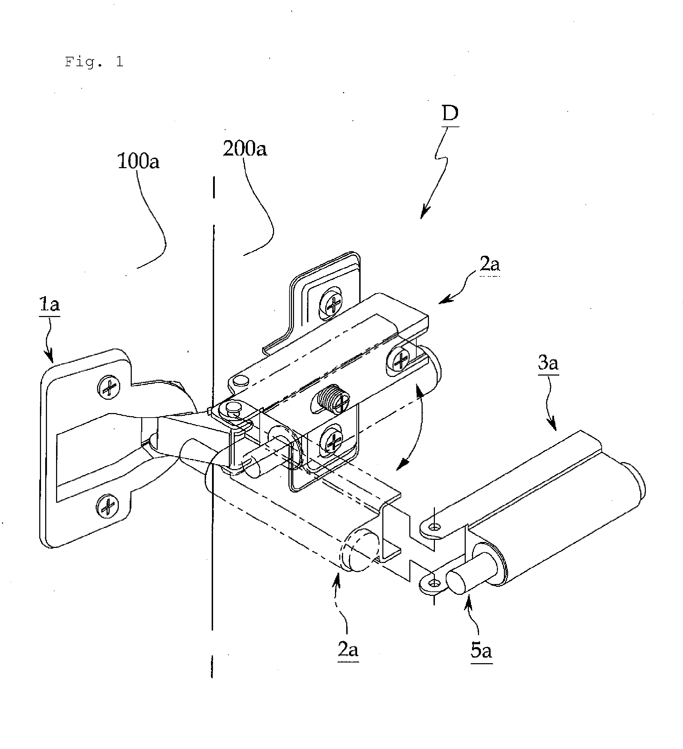

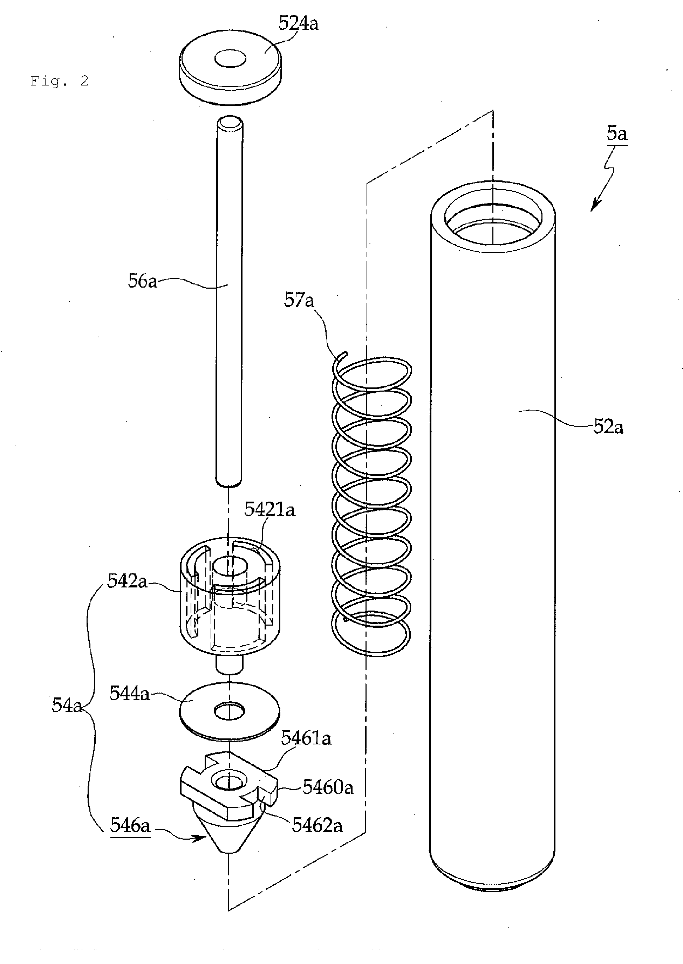

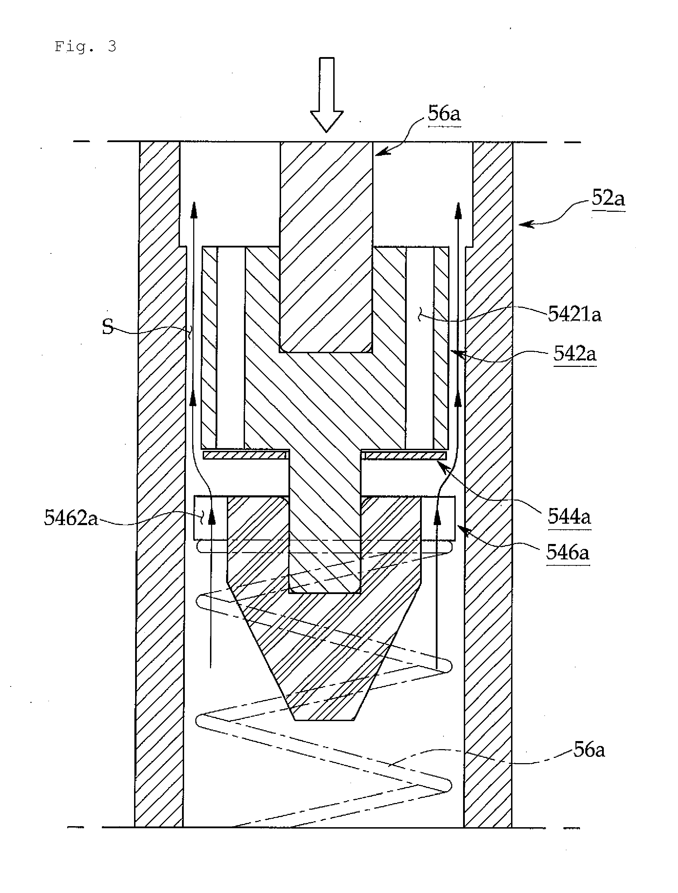

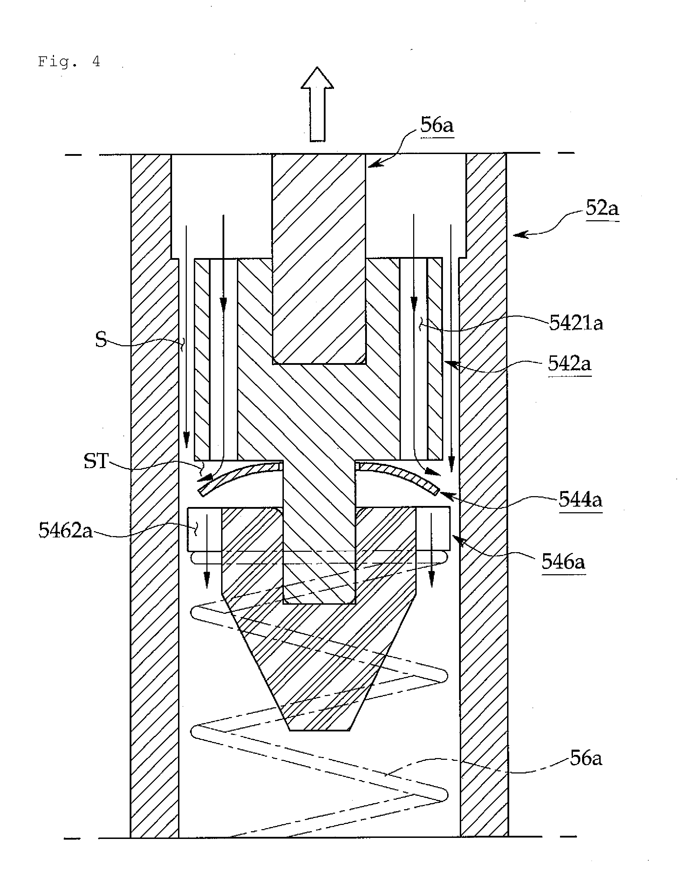

FIG. 1 is an exploded perspective view illustrating a conventional door damper, FIG. 2 is an exploded perspective view illustrating a buffer applied to the conventional door damper, and FIGs. 3 and 4 are cross-sectional views illustrating an operation of the conventional door damper.

As illustrated in FIGs. 1 to 4, the conventional door damper D includes a first fixed part 1a connected to a door 100a, a second fixed part 2a attached to an inner wall of a piece of furniture 200a, a buffering cover 3a mounted to the second fixed part 2a, and a buffer 5a coupled to an inner side of the buffering cover 3a, one end portion of the buffer 5a being supported by the door 100a.

The buffer 5a is detachably coupled to the buffering cover 3a, and includes a cylinder-shaped body 52a in which a fluid is filled, a piston member 54a inserted into the body 52a, an actuating pin 56a coupled to the piston member 54a, and an elastic body 57a inserted into the body 52a to support the piston member 54a.

The piston member 54a includes a piston 542a having a predetermined diameter so as to be spaced apart from an inner peripheral surface of the body 52a, having a plurality of holes 5421a to enable the fluid to flow therein, and being coupled to the actuating pin 56a, a round plate-shaped disk 544a disposed so as to be in contact with a front end of the piston 542a and coupled to the actuating pin 56a, and a head 546a coupled to an end portion of the actuating pin 56a and provided incised parts 5461a and holes 5462a in both sides of a ring-shaped part 5460a formed in an outer peripheral so as to enable the fluid to move.

Reference numeral 524a (not-described) denotes a cover coupled to the body 52a to seal the body 52a.

In describing an operational relation of the piston member 54a, as illustrated in FIG. 3, since the actuating pin 56a is pressurized according to the closing of a door, the piston member 54a is inserted into the inside of the body 52a (in a descending direction in the drawing), so that the fluid moves through a space S between the outer peripheral surface of the piston 542a and an inner peripheral surface of the body 52a. This is referred to as a normal directional movement, and a flow of the fluid is indicated with an arrow.

Accordingly, a small quantity of fluid passes through the space S, so that the time of closing the door is delayed.

In the meantime, as illustrated in FIG. 4, when a door is open, force applied to the actuating pin 56a is removed, so that the piston member 54a rises by restoration force of the elastic body 57a, and the fluid moves through the holes 5421a of the piston 542a, moves through a space ST by pushing the disk 544a, and moves through the incised parts 5461a and the holes 5462a of the head 546a. This is referred to as an inverse directional movement, and the actuating pin 56a returns to its original state.

However, according to the prior art, a rate of the fluid flow is too slow, so a time of returning of the piston member 54a and the actuating pin 561 is excessively delayed.

### Detailed Description of the Invention

### Technical Problem

Accordingly, an aspect of the present invention is to solve the above-stated problems occurring in the prior art and to provide a door damper buffer, which can enable a fluid to quickly move in a normal direction and an inverse direction by improving a structure of a piston member embedded in a door damper, thereby improving a returning time of the door damper.

### Technical solution

In accordance with an aspect of the present invention, there is provided a door damper buffer including: a body in which a fluid is filled and in which a spring is inserted; a piston member inserted into the body and elastically supported by the spring; and an actuating pin coupled to the piston member, wherein the piston member includes: a piston spaced apart from an inner peripheral surface of the body, provided with a plurality of recesses in an outer peripheral surface thereof so as to enable the fluid to move, and coupled to the actuating pin; a disk disposed in a front end portion of the piston and provided with a hole having a diameter larger than that of the actuating pin to be coupled movably along the actuating pin; and a head provided with a plurality of steps and recesses in an outer peripheral surface so as to enable the fluid to move.

The disk is provided with guide protrusions protruding from a center of one surface thereof and central recesses formed at a center of a lower surface of the piston such that the guide protrusions are inserted thereto, so that an operation range of the disk is limited to a gap in which the guide protrusions move within the central recesses.

The disk is provided with a plurality of embossings in the other surface of the disk so that a space through which the fluid moves when the embossings are in contact with the steps of the head is formed.

### Effect of the Invention

According to the present invention, the structure of the piston member is improved so as to enable a fluid to quickly move in a normal direction and an inverse direction, thereby improving a returning time of the door damper and achieving an accurate and rapid buffering operation.

### Brief Description of the Drawings

FIG. 1 is an exploded perspective view illustrating a conventional door damper.
FIG. 2 is an exploded perspective view illustrating a buffer applied to the conventional door damper.
FIGs. 3 and 4 are cross-sectional views illustrating an operation of the conventional door damper.
FIG. 5 is an exploded perspective view illustrating a door damper buffer according to the present invention.
FIGs. 6 and 7 are cross-sectional views illustrating a coupled door damper buffer according to the present invention, in which FIG. 6 illustrates an operation when the door damper buffer is inserted, and FIG. 7 illustrates an operation when the door damper buffer is withdrawn.

### Best Mode for Carrying out the Invention

Hereinafter, an exemplary embodiment of the present invention will be described with reference to the accompanying drawings in detail.

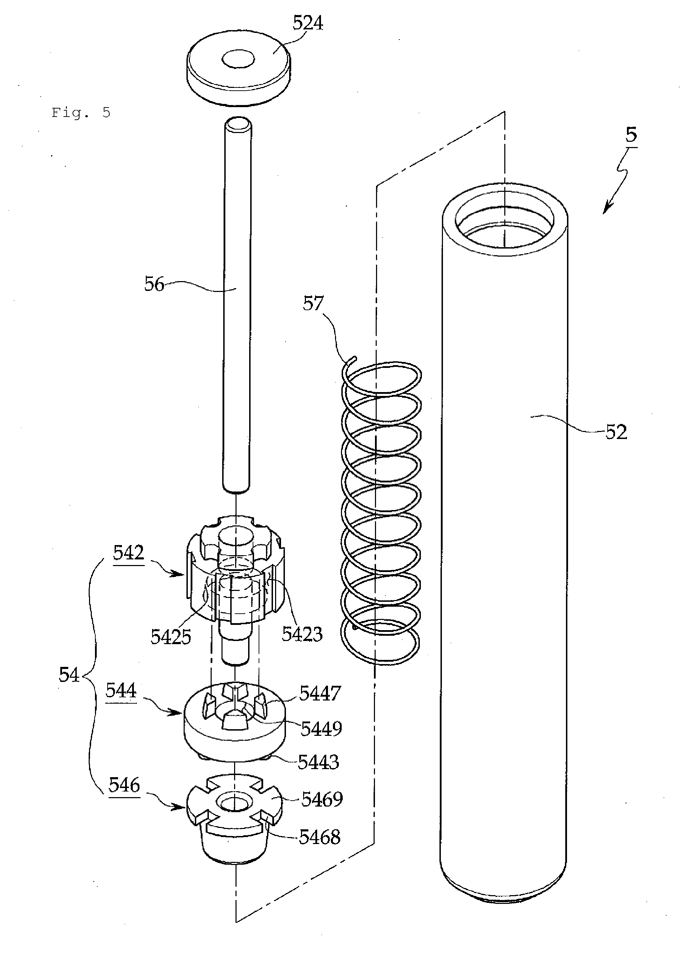

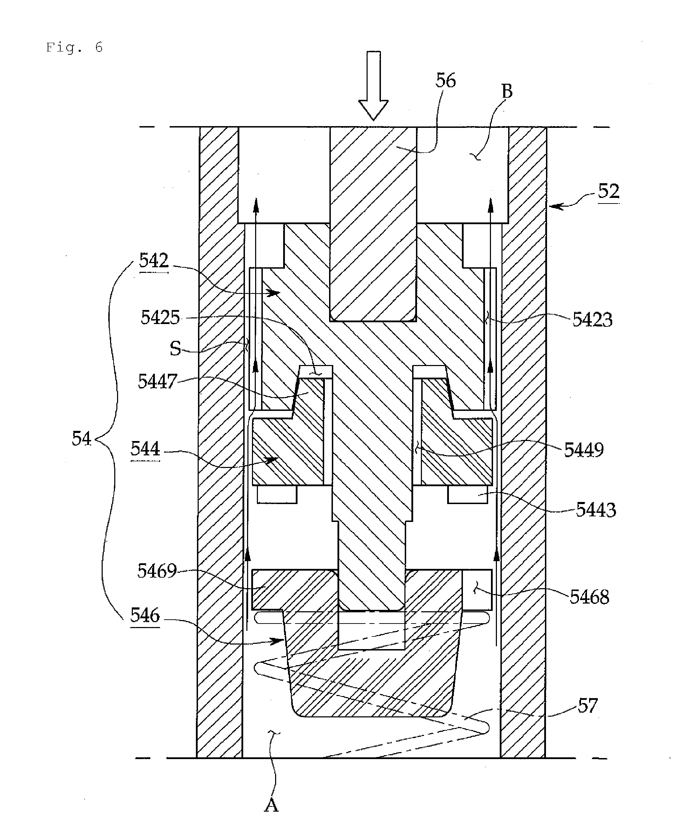

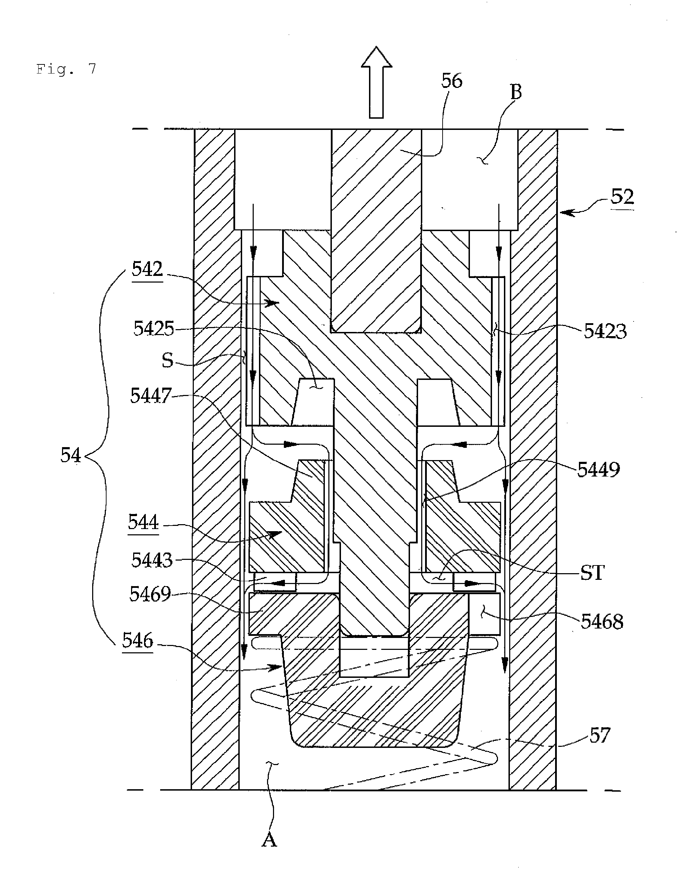

FIG. 5 is an exploded perspective view illustrating a door damper buffer according to the present invention, and FIGs. 6 and 7 are cross-sectional views illustrating a coupled door damper buffer according to the present invention, in which FIG. 6 illustrates an operation when the door damper buffer is inserted, and FIG. 7 illustrates an operation when the door damper buffer is withdrawn.

As illustrated in FIGs. 5 to 7, a door damper buffer 5 according to the present invention includes a body 52 in which a fluid is filled and in which a spring 57 is inserted, a piston member 54 inserted into the body 52 and elastically supported by the spring 57, and an actuating pin 56 coupled to the piston member 54.

The piston member 54 includes a piston 542 spaced apart from an inner peripheral surface of the body 52, provided with a plurality of recesses 5423 in an outer peripheral surface thereof to enable the fluid to move, and coupled to the actuating pin 56, a disk 544 disposed in a front end portion of the piston 542 and provided with a hole 5449 having a diameter larger than that of the actuating pin 56 to be movable along the actuating pin 56, and a head 546 coupled to an end portion of the actuating pin 56 and provided with a plurality of steps 5469 and a plurality of recesses 5468, which are alternatingly formed in an outer peripheral surface, to enable the fluid to move.

The body 52 is a hollow cylinder-shaped body, and one end portion thereof is closed and the other end portion thereof is sealed by a cover 524 to which the actuating pin 56 is coupled. An inner side of the body 52 is filled with a fluid, such as oil, and the spring 57 is inserted into the body 52.

The actuating pin 56 is a pin member having a predetermined length. One end portion of the actuating pin 56 is coupled to the piston member 54 and the other end portion of the actuating pin 56 is coupled with the cover 524 while passing through a center of the cover 524, so that the actuating pin 56 may move forward and backward, and a packing is coupled to a passing portion to be sealed in order to prevent fluid leakage.

The piston 542 is fitted to a lower end of the actuating pin 56 to be fixedly coupled, and is shaped like a disk having a predetermined thickness and has a diameter smaller than that of the body 52 such that an outer peripheral surface of the piston 542 is spaced apart from the inner peripheral surface of the body 52, so that a space S is formed between the outer peripheral surface of the piston 542 and an inner wall of the body 52. Especially, the piston 542 includes the plurality of recesses 5423 formed in a direction parallel to the body 52 in order to increase a quantity of moving fluid in the outer peripheral surface thereof.

The disk 544 includes the hole 5449 having a diameter larger than that of the actuating pin 56, to be coupled movably along the actuating pin 56, so that when the piston member 54 is inserted, the disk 544 is in close contact with the front end portion of the piston 542, and when the piston member 54 is withdrawn, the disk 544 is spaced apart from the piston 542. Accordingly, when the piston member 54 is withdrawn, the disk 544 is spaced apart from the piston 542 but is close to the head 546, so that the fluid may simultaneously move to the outer peripheral surface of the disk 544 and move through the hole 5449, thereby increasing the quantity of moving fluid.

That is, in the prior art, since the fluid moves only through the space S formed between the piston 542 and the inner wall of the body 52 by the pressure of the fluid in a state where the disk 544 is fixed, the returning time is delayed due to the decrease of the quantity of moving fluid.

However, in the present invention, since the disk 544 may be spaced apart from the piston 542 and the fluid may move through the center hole 5449 and the outer peripheral surface of the disk 544, the quantity of moving fluid may be remarkably increased compared to the prior art, thereby rapidly reducing the returning time.

Further, the disk 544 is provided with guide protrusions 5447 protruding from a center of one surface thereof and is provided with center recesses 5425 at a center of a lower surface of the piston 542 such that the guide protrusions 5447 are inserted therein.

Accordingly, an operation range of the disk 544 is limited to a gap in which the guide protrusion 5447 moves within the center recess 5425.

Then, the disk 544 is provided with a plurality of embossings 5443 in an opposite surface thereof, i.e. a surface being in contact with the head 546, to form a space ST which enables the fluid to move when the disk 544 is in contact with the steps 5469 of the head 546 (see FIG. 7).

The embossing 5443 refers to a hemispherical protrusion, but is not necessarily limited to the hemispherical protrusion.

The head 546 is a cylindrical body coupled to the end portion of the actuating pin 56, and the plurality of steps 5469 and recesses 5468 are alternatingly formed at an upper end in correspondence to the disk 544, so that the fluid may be transferred through the recesses 5468.

Hereinafter, an operation of the present invention having the aforementioned construction will be described.

The buffer 5 of the present invention is coupled to the door damper D and then the door damper D is attached to the inner wall of a piece of furniture.

Accordingly, the actuating pin 56 of the buffer 5 is exposed to the outside to be in contact with a door 100'.

Then, when the door 100' is closed, the actuating pin 56 is pressurized to be inserted into the piston member 54.

That is, as illustrated in FIG. 6, when the piston member 54 is inserted, the spring 57 is compressed and the fluid existing in area A moves to area B through the space S with the inner peripheral surface of the body 52.

In this case, the disk 544 moves by the pressurization of the fluid to be in close contact with the piston 542.

Then, as illustrated in FIG. 7, when the door is opened, the applied pressure is released, so that the spring 57 is tensioned by restoration force and pushes the piston member 54, and thus the piston member 54 is withdrawn. The fluid existing in the area B moves through the recesses 5423 of the piston 542 and the space S with the inner wall of the body 52, and then move to the area A through the hole 5449 and the outer peripheral surface of the disk 544.

In this case, the disk 544 is pushed by the fluid to come into close contact with the head 546, but the regular space ST is formed by the embossings 5443, so that the fluid moved through the hole 5449 moves to the head 546 through the space ST.

The fluid moved to the head 546 moves to the area A through the recesses 5468 and the space S with the inner wall of the body 52.

Accordingly, flow paths through which the fluid moves are the recesses 5423 of the piston 542, the space S between the outer peripheral surface of the piston 542 and the inner wall of the body 52, the hole 5449 of the disk 544, the space S between the outer peripheral surface of the disk 544 and the inner wall of the body 52, the space ST between the disk 544 and the head 546, and the space S between the head 546 and the inner wall of the body 52, so that the flow paths are significantly increased compared to the prior art. Accordingly, the quantity of moving fluid may be increased and thus the operation switching may be rapidly performed.

Although the exemplary embodiment of the present invention has been described, those skilled in the art will appreciate that various modifications and changes are possible, without departing from the subject matter and the scope of the invention, and the modification and the change will belong to the scope of the accompanying claims.

### Description of reference numerals

| | | | |
|---|---|---|---|
| 5: | Buffer | 52: | Body |
| 54: | Piston member | 56: | Actuating pin |
| 57: | Spring | 542: | Piston |
| 544: | Disk | 546: | Head |

## Claims

1. A door damper buffer comprising:
a body 52 in which a fluid is filled and in which a spring 57 is inserted;
a piston member 54 inserted into the body 52 and elastically supported by the spring 57; and
an actuating pin 56 coupled to the piston member 54,
wherein the piston member 54 comprises:
a piston 542 spaced apart from an inner peripheral surface of the body 52, provided with a plurality of recesses 5423 in an outer peripheral surface thereof so as to enable the fluid to move, and coupled to the actuating pin 56;
a disk 544 disposed in a front end portion of the piston 542 and provided with a hole 5449 having a diameter larger than that of the actuating pin 56 to be coupled movably along the actuating pin 56; and
a head 546 provided with a plurality of steps 5469 and recesses 5468 in an outer peripheral surface so as to enable the fluid to move.

2. The door damper buffer as claimed in claim 1, wherein the piston 542 is shaped like a disk having a predetermined thickness, has a diameter smaller than that of the body 52 such that the outer peripheral surface of the piston 542 is spaced apart from the inner peripheral surface of the body 52, so that a space S is formed between the outer peripheral surface of the piston 542 and an inner wall of the body 52, and the piston 542 is provided with the plurality of recesses 5423 in a direction parallel to the body 52 in the outer peripheral surface thereof in order to increase a quantity of moving fluid.

3. The door damper buffer as claimed in claim 1, wherein the disk 544 comprises:
guide protrusions 5447 protruding from a center of one surface thereof; and
central recesses 5425 formed at a center of a lower surface of the piston 542 such that the guide protrusions 5447 are inserted thereto,
wherein an operation range of the disk 544 is limited to a gap in which the guide protrusions 5447 move within the central recesses 5425.

4. The door damper buffer as claimed in claim 1, wherein the disk 544 is provided with a plurality of embossings 5443 in one surface of the disk 544, and a space ST through which the fluid moves when the embossings 5443 are in contact with the steps 5469 of the head 546 is formed.

5. The door damper buffer as claimed in claim 4, wherein the embossing 5443 is a hemisphere-shaped protrusion.
